# EUROPEAN PATENT APPLICATION

(11) **EP 4 734 237 A1**
(43) Date of publication of application: **29.04.2026**
(21) Application number: 25176572.3
(22) Date of filing: 15.05.2025
(51) Int. Cl.: H01M 50/103, H01M 50/176, H01M 50/533, H01M 50/536, H01M 50/557, H01M 50/566, H01M 10/6553, H01M 50/54, H01M 50/553

(54) **SECONDARY BATTERY AND BATTERY PACK INCLUDING THE SAME**

(30) Priority: 28.10.2024 KR 20240148713
(71) Applicant: SAMSUNG SDI CO., LTD., Yongin-si, Gyeonggi-do 17084 (KR)
(72) Inventor: KIM, Tae Jun, 16678 Suwon-si, Gyeonggi-do (KR); SHIM, Sung Hun, 16678 Suwon-si, Gyeonggi-do (KR)
(74) Representative: Gulde & Partner

(57) **Abstract**

A secondary battery (100) and a battery pack (1) including the same are disclosed. A secondary battery (100) includes a case (101) including an opening (160), an electrode assembly (200) accommodated in the case (101), an electrode tab (301, 302, 310, 320) connected to the electrode assembly (200), a cap plate (501) closing the opening (160), a terminal (530, 540) coupled to the cap plate (501), and a current collecting member (400A, 400B, 400C, 400D) including a plate portion (401) coupled to the electrode tab (301, 302, 310, 320) and configured to allow a current flow therebetween, a terminal coupling part protruding from the plate portion (401) to be coupled to the terminal (530, 540) and configured to allow a current flow therebetween, and a heat capacity increasing part protruding from the plate portion (401) without contacting a portion of the cap plate (501) and the terminal (530, 540).

## Description

### BACKGROUND

### 1. Field

Aspects of embodiments of the present disclosure relate to a secondary battery and a battery pack including the same.

### 2. Description of the Related Art

Generally, with the recent rapid spread of electronic devices using batteries, such as mobile phones, laptop computers, and electric vehicles, the demand for secondary batteries having high energy density and high capacity has been rapidly increasing. Accordingly, research and development for improving performance of lithium secondary batteries is being actively conducted.

Lithium secondary batteries are batteries which include positive electrodes and negative electrodes including active materials capable of intercalation and deintercalation of lithium ions and electrolytes and produce electric energy through oxidation and reduction reactions when lithium ions are intercalated/deintercalated at the positive electrodes and negative electrodes.

The aforementioned information disclosed in this background section is provided for enhancement of understanding of the background technology of the present disclosure, and therefore may contain information that does not constitute the related art.

### SUMMARY

According to an aspect of embodiments of the present disclosure, a secondary battery, in which heat generation of a current collecting member connecting an electrode tab and a terminal is reduced, and a battery pack including the same, are provided.

However, technical aspects and objectives to be achieved by the present disclosure are not limited to the above-described aspects and objectives, and other aspects and objectives, which are not described above, will be clearly understood by those skilled in the art through the following description of the disclosure.

According to one or more embodiments of the present disclosure, a secondary battery includes a case including an opening, an electrode assembly accommodated in the case, an electrode tab connected to the electrode assembly, a cap plate closing the opening, a terminal coupled to the cap plate, and a current collecting member including a plate portion coupled to the electrode tab such that a current flows therebetween, a terminal coupling part protruding from the plate portion to be coupled to the terminal such that a current flows therebetween, and a heat capacity increasing part protruding from the plate portion without contacting a portion of the cap plate and the terminal.

The plate portion may include a first plate portion overlapping the terminal and may include a second plate portion extending to be stepped from the first plate portion and coupled to the electrode tab, wherein the terminal coupling part may include a first contact protrusion protruding from the first plate portion to be coupled to the terminal.

The terminal may include a thick portion and a thin portion that is thinner than the thick portion, and the thin portion may be welded to the first contact protrusion.

The terminal coupling part may further include a second contact protrusion protruding from the first plate portion to avoid the first contact protrusion and to be coupled to the terminal.

The terminal may include a protrusion through hole in which an end portion of the second contact protrusion is inserted, and the end portion of the second contact protrusion inserted in the protrusion through hole may be welded to an inner surface of the protrusion through hole.

The second contact protrusion may include a plurality of second contact protrusions, and the plurality of second contact protrusions may be symmetrically located around the first contact protrusion.

The second contact protrusion may include a plurality of second contact protrusions, and the plurality of second contact protrusions may be located at opposite end portions of the plate portion in a width direction.

The heat capacity increasing part may include a first non-contact protrusion which may protrude from the second plate portion toward the cap plate.

The second plate portion may be welded to the electrode tab, the second plate portion may include a welded portion on a portion to which the electrode tab is welded, and the first non-contact protrusion may protrude from the second plate portion to avoid the welded portion.

The first non-contact protrusion may be located to be biased to a side in a width direction of the second plate portion.

The first non-contact protrusion may extend to be parallel to a longitudinal direction of the second plate portion.

The first non-contact protrusion may include a plurality of first non-contact protrusions, and the plurality of first non-contact protrusions may be arrayed in a longitudinal direction of the second plate portion.

The heat capacity increasing part may further include a second non-contact protrusion which may protrude from the first plate portion toward the terminal to avoid the first contact protrusion.

The second non-contact protrusion may include a plurality of second non-contact protrusions, and the plurality of second non-contact protrusions may be symmetrically located around the first contact protrusion.

According to one or more embodiments of the present disclosure, a battery pack includes a housing and a plurality of secondary batteries in the housing, wherein each of the secondary batteries includes a case including an opening, an electrode assembly accommodated in the case, an electrode tab connected to the electrode assembly, a cap plate closing the opening, a terminal coupled to the cap plate, and a current collecting member including a plate portion coupled to the electrode tab such that a current flows therebetween, a terminal coupling part protruding from the plate portion to be coupled to the terminal such that a current flows therebetween, and a heat capacity increasing part protruding from the plate portion without contacting a portion of the cap plate and the terminal.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The above and other aspects, objects, features, and advantages of the present disclosure will become more apparent to those of ordinary skill in the art by describing some embodiments thereof in further detail with reference to the accompanying drawings, in which:
FIG. 1 is a perspective view illustrating a secondary battery according to an embodiment of the present invention;
FIG. 2 is an exploded perspective view illustrating the secondary battery of FIG. 1;
FIG. 3 is a schematic view illustrating a structure of an electrode assembly and an electrode tab of FIG. 2;
FIG. 4 is a cross-sectional view along the line S1-S1 of FIG. 1;
FIG. 5 is a perspective view illustrating a current collecting member which may be provided in the secondary battery of FIG. 1, according to an embodiment;
FIG. 6 is a plan view illustrating the current collecting member of FIG. 5;
FIG. 7 is a perspective view illustrating a current collecting member which may be provided in the secondary battery of FIG. 1, according to another embodiment;
FIG. 8 is a plan view illustrating the current collecting member of FIG. 7;
FIG. 9 is a perspective view illustrating a current collecting member which may be provided in the secondary battery of FIG. 1 and a terminal, according to another embodiment;
FIG. 10 is a plan view illustrating the current collecting member and the terminal of FIG. 9;
FIG. 11 is a perspective view illustrating a current collecting member which may be provided in the secondary battery of FIG. 1 and a terminal, according to another embodiment;
FIG. 12 is a plan view illustrating the current collecting member and the terminal of FIG. 11; and
FIG. 13 is a schematic perspective view illustrating a structure of a battery pack according to an embodiment of the present invention.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein are to be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

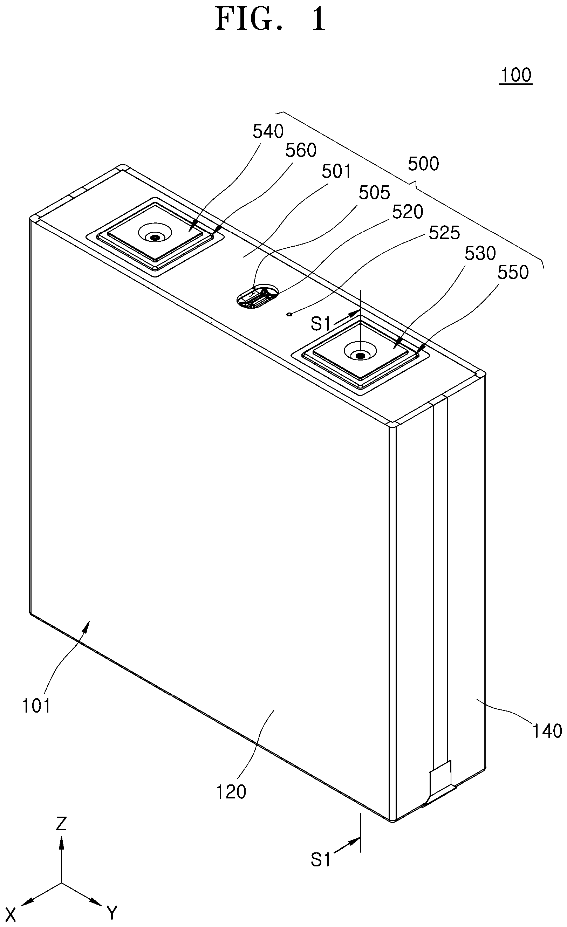

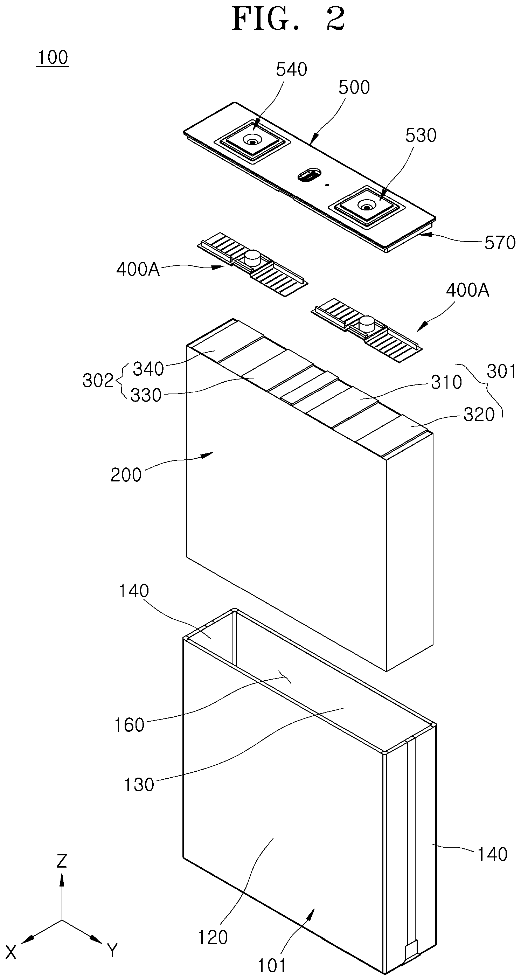

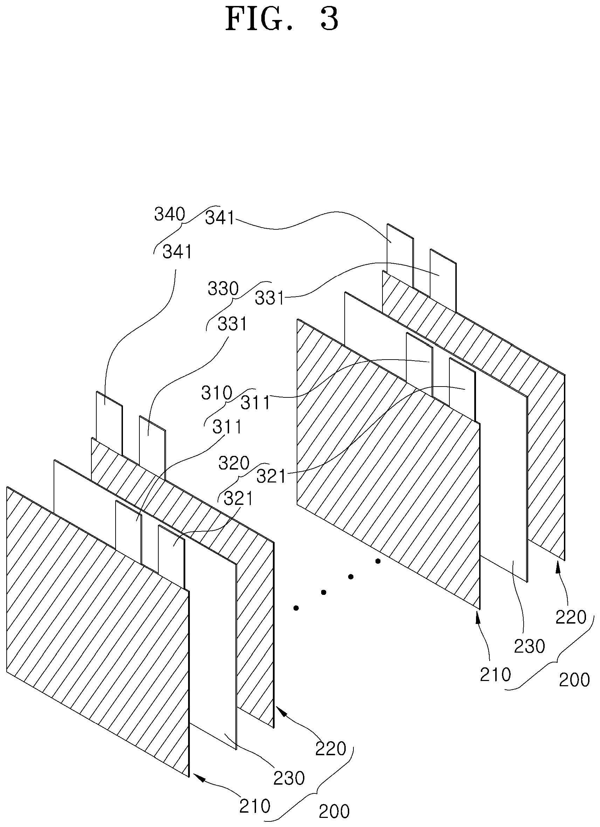

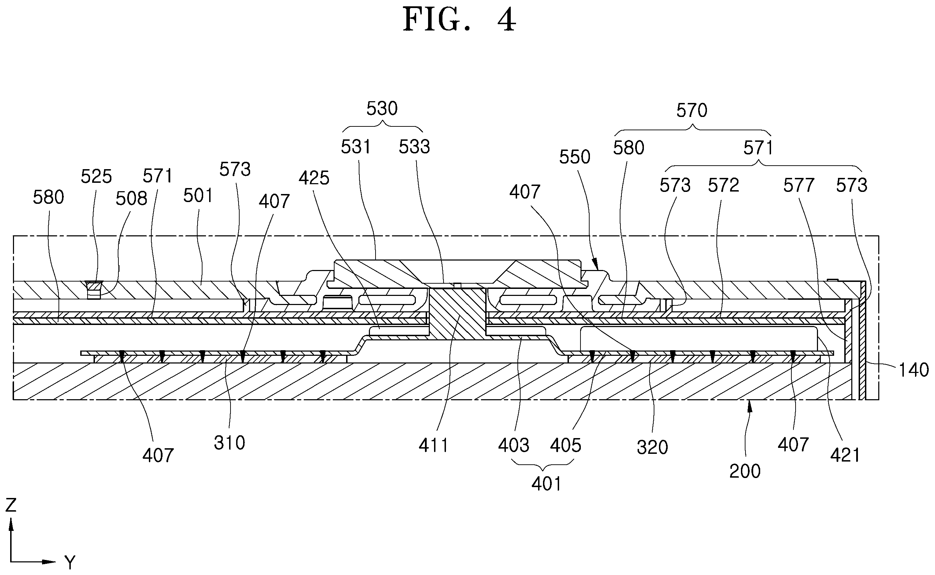

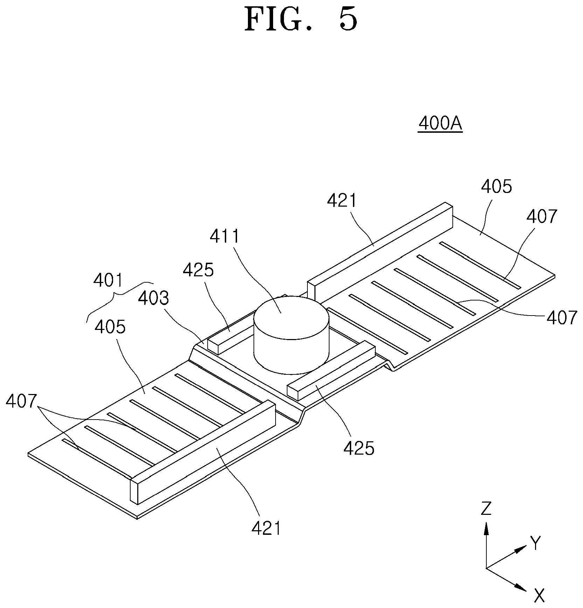

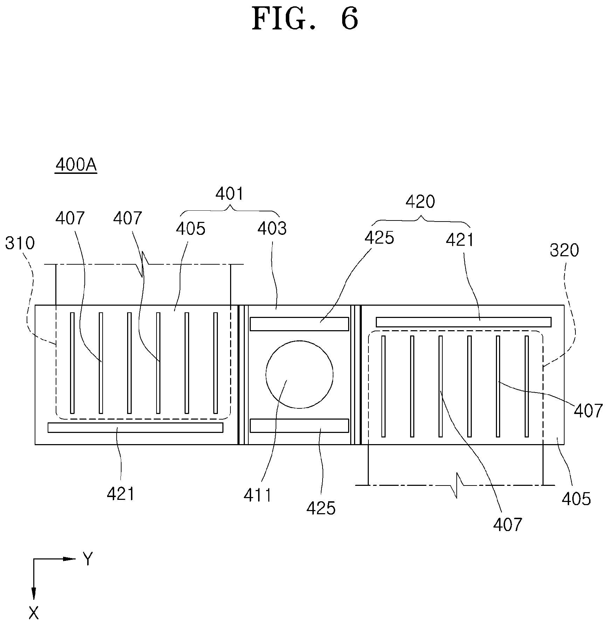

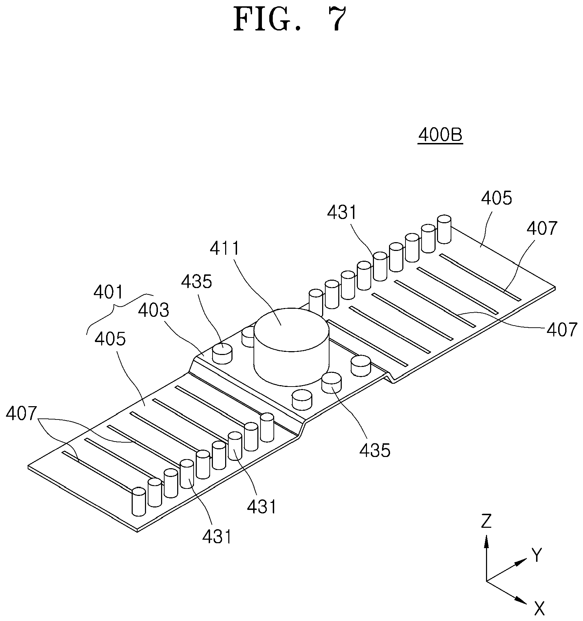

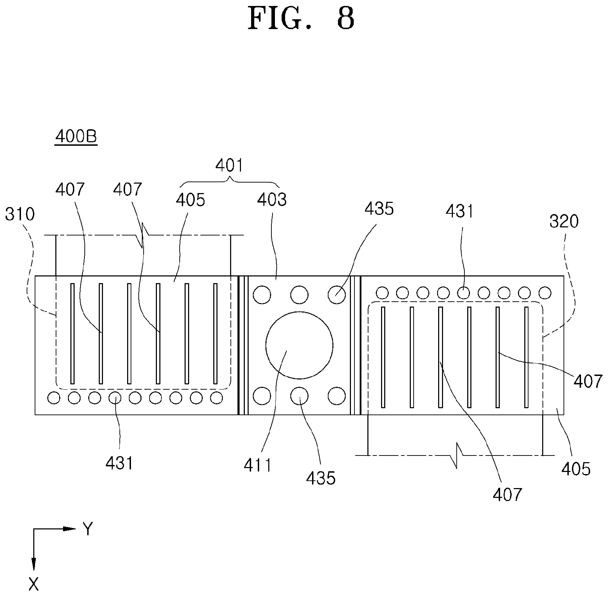

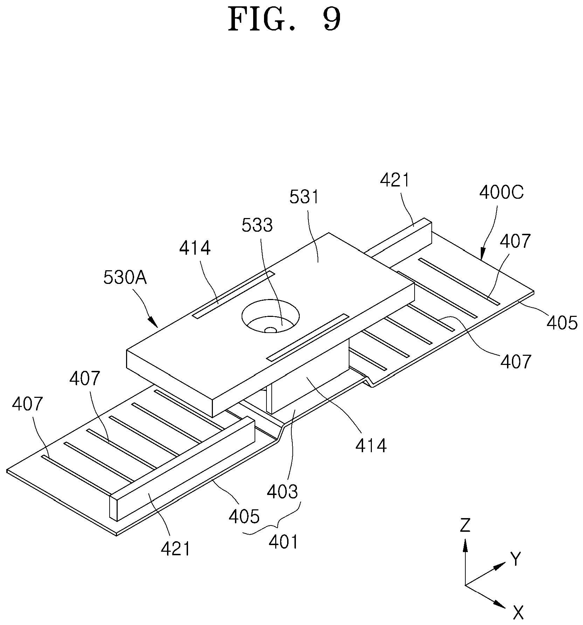

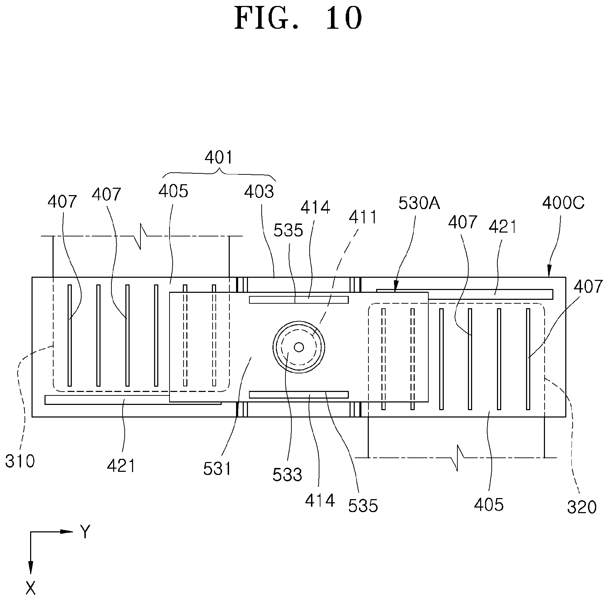

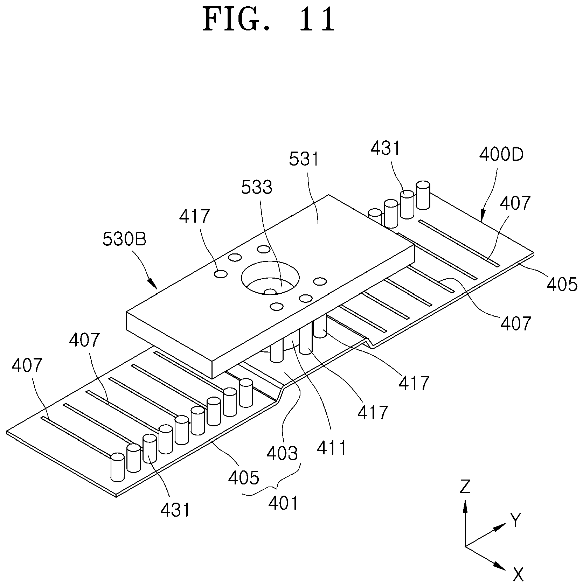

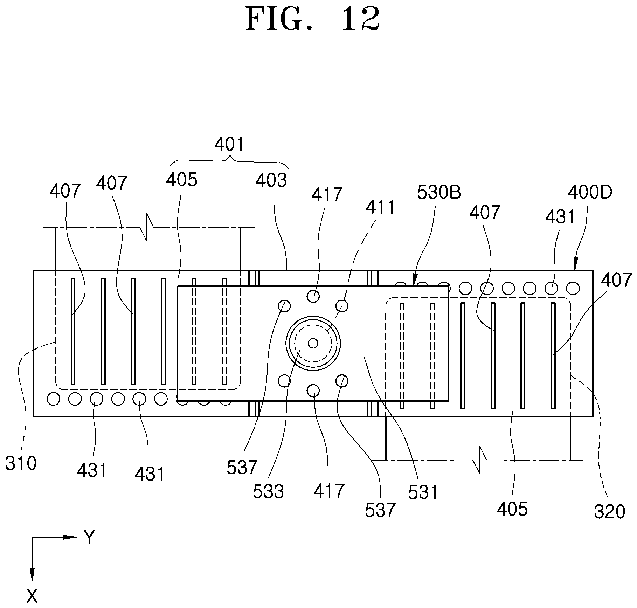

FIG. 1 is a perspective view illustrating a secondary battery according to an embodiment of the present invention; and FIG. 2 is an exploded perspective view illustrating the secondary battery of FIG. 1. FIG. 3 is a schematic view illustrating a structure of an electrode assembly and an electrode tab of FIG. 2; and FIG. 4 is a cross-sectional view along the line S1-S1 of FIG. 1. FIG. 5 is a perspective view illustrating a current collecting member which may be provided in the secondary battery of FIG. 1, according to an embodiment; and FIG. 6 is a plan view illustrating the current collecting member of FIG. 5. FIG. 7 is a perspective view illustrating a current collecting member which may be provided in the secondary battery of FIG. 1, according to an embodiment; and FIG. 8 is a plan view illustrating the current collecting member of FIG. 7. FIG. 9 is a perspective view illustrating a current collecting member which may be provided in the secondary battery of FIG. 1 and a terminal, according to an embodiment; and FIG. 10 is a plan view illustrating the current collecting member and the terminal of FIG. 9. FIG. 11 is a perspective view illustrating a current collecting member which may be provided in the secondary battery of FIG. 1 and a terminal, according to an embodiment; and FIG. 12 is a plan view illustrating the current collecting member and the terminal of FIG. 11.

Herein, a prismatic lithium-ion secondary battery will be described as an example of the secondary battery. However, the present invention is not limited thereto, and the secondary battery may be a lithium polymer battery or a cylindrical battery, for example.

Referring to FIGS. 1 to 6, a secondary battery 100 according to an embodiment of the present disclosure includes a case 101, an electrode assembly 200, electrode tabs 301 and 302, a cap plate 501, terminals 530 and 540, and a current collecting member 400A.

The case 101 may form an overall exterior of the secondary battery 100 and accommodate the electrode assembly 200. The case 101 may include a bottom portion (not shown), a front portion 120, a rear portion 130, and a pair of side portions 140.

Based on FIG. 1, the bottom portion may form a lower exterior of the case 101. The bottom portion according to an embodiment may have a rectangular plate shape. The front portion 120, the rear portion 130, and the pair of side portions 140 may form a peripheral exterior of the case 101.

Based on FIG. 1, each of the front portion 120, the rear portion 130, and the pair of side portions 140 according to an embodiment may have a plate shape extending upward from an edge of the bottom portion. The front portion 120, the rear portion 130, and the pair of side portions 140 may be disposed to surround a space on the bottom portion. In an embodiment, the front portion 120, the rear portion 130, and the pair of side portions 140 may form a rectangular cross-sectional shape.

In an embodiment, the front portion 120 and the rear portion 130 may be disposed to be parallel to each other. In an embodiment, an area of the front portion 120 may be the same as an area of the rear portion 130. The pair of side portions 140 may be disposed to be parallel to each other. Areas of the pair of side portions 140 may be the same. The area of each of the pair of side portions 140 may be smaller than that of each of the front portion 120 and the rear portion 130.

The case 101 includes an opening 160. The opening 160 according to an embodiment may be a space surrounded by upper end portions of the front portion 120, the rear portion 130, and the pair of side portions 140. The opening 160 may connect an inner space and an outer space of the case 101. Accordingly, the case 101 according to an embodiment may have a rectangular parallelepiped shape with an open upper side.

Herein, a width direction of the secondary battery may be a direction crossing the front portion 120 and the rear portion 130 and may be referred to as a first direction. A direction crossing the pair of side portions 140 may be referred to as a second direction. A direction which is perpendicular to the first direction and the second direction and crosses the bottom portion and the cap plate 501 of the secondary battery may be referred to as a third direction. In FIGS. 1, 2, and 4, an X-axis may be parallel to the first direction, a Y-axis may be parallel to the second direction, and a Z-axis may be parallel to the third direction.

The electrode assembly 200 is accommodated in the case 101. The electrode assembly 200 may function as a unit structure performing operations of charging and discharging power in the secondary battery 100. The electrode assembly 200 may be accommodated in the case 101. The electrode assembly 200 may include a first electrode 210, a second electrode 220, and a separator 230 disposed between the first electrode 210 and the second electrode 220. The first electrode 210, the separator 230, and the second electrode 220 may be provided as a plurality of first electrodes 210, a plurality of separators 230, and a plurality of second electrodes 220.

Herein, an example of the electrode assembly 200 having a stack form, in which the plurality of first electrodes 210, the plurality of separators 230, and the plurality of second electrodes 220 are sequentially stacked in the second direction, will be described. However, the electrode assembly 200 is not limited to such a form, and may be formed in a form in which the first electrode 210, the separator 230, and the second electrode 220 are wound about a winding axis in a clockwise or counterclockwise direction while stacked.

The first electrode 210 may function as either of a positive electrode or a negative electrode of the electrode assembly 200. Herein, an example in which the first electrode 210 is the positive electrode of the electrode assembly 200 will be described. However, the first electrode 210 is not limited thereto and may function as the negative electrode of the electrode assembly 200.

The first electrode 210 according to an embodiment may be formed in the shape of a foil including a metal material, such as aluminum or an aluminum alloy. A type, size, and shape of the first electrode 210 are not specifically limited as long as the first electrode 210 does not cause a chemical change in the secondary battery and has conductivity. A design of a cross-sectional shape of the first electrode 210 may be varied to have any one of various shapes in addition to the rectangular shape illustrated in FIG. 3.

The first electrode 210 may be provided as the plurality of first electrodes 210. The plurality of first electrodes 210 may be disposed between the front portion 120 and the rear portion 130 of the case 101 in the first direction. A design of the number of first electrodes 210 may be variously changed depending on a charging capacity of the secondary battery, for example.

A first active material layer may be applied on at least a portion of the first electrode 210. In an embodiment, the first active material layer may be applied on both, or opposite, surfaces of the first electrode 210. In another embodiment, the first active material layer may be applied on only one surface of the first electrode 210.

In an embodiment, the first electrode 210 functions as the positive electrode, and the first active material layer may include a positive electrode active material.

The positive electrode active material may be a reversible intercalation and deintercalation compound (lithiated intercalation compound) for lithium. In an embodiment, one or more compound oxides of a metal selected from the group consisting of cobalt, manganese, nickel, iron, and a combination thereof and lithium may be used as the positive electrode active material.

For example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z=1. In an embodiment, the positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM), or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer may further include a positive electrode conductive material.

The positive electrode conductive material imparts conductivity to the positive electrode active material layer, and any suitable material that does not cause a chemical change and is electronically conductive may be used as the positive electrode conductive material. Examples of the positive electrode conductive material may be a carbon-based material, such as natural graphite, artificial graphite, carbon black, acetylene black, Ketjen black, carbon fibers, carbon nanofibers, and carbon nanotubes, a metal-based material in the form of a metal powder or metal fibers containing copper, nickel, aluminum, silver, and the like, a conductive polymer, such as a polyphenylene derivative, or a mixture thereof.

The first active material layer may further include a positive electrode binder.

The positive electrode binder attaches particles constituting the positive electrode active material to each other well and attaches the positive electrode active material to the first electrode 210 well. A non-aqueous binder, an aqueous binder, a dry binder, or a combination thereof may be used as an example of the positive electrode binder.

The non-aqueous binder may be polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from the group consisting of styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the positive electrode binder, the first active material layer may further include a cellulose compound which imparts viscosity. One or more of carboxymethyl cellulose, hydroxypropyl methyl cellulose, methyl cellulose, and alkaline metal salts thereof may be mixed and used as the cellulose compound. Na, K, or Li may be used as an alkaline metal.

The dry binder is a fibrous polymer material, and may be, for example, polytetrafluoroethylene, polyvinylidene fluoride, a polyvinylidene fluoride-hexafluoropropylene copolymer, polyethylene oxide, or a combination thereof.

Although not illustrated in the drawings, the first electrode 210 may include a first uncoated portion on which the first active material layer is not applied. The first uncoated portion may be disposed in an upper end region of the first electrode 210 disposed to face the opening 160 in the case 101. However, the first uncoated portion is not limited thereto and, in an embodiment, may be formed on an entire edge region of the first electrode 210.

The second electrode 220 may function as the remaining one of the positive electrode or the negative electrode of the electrode assembly 200. Herein, an example in which the second electrode 220 is the negative electrode of the electrode assembly 200 will be described. However, the second electrode 220 is not limited thereto and may function as the positive electrode of the electrode assembly 200.

The second electrode 220 may be provided as the plurality of second electrodes 220. The plurality of second electrodes 220 may be disposed between the front portion 120 and the rear portion 130 of the case 101 in the first direction. The first electrode 210 and the second electrode 220 may be alternately disposed in the first direction. The second electrode 220 may be spaced by a distance (e.g., a predetermined distance) from the first electrode 210 in the first direction.

The second electrode 220 according to an embodiment may be formed in the shape of a foil including a metal material, such as copper, a copper alloy, nickel, or a nickel alloy. A type, size, and shape of the second electrode 220 are not specifically limited as long as the second electrode 220 does not cause a chemical change in the secondary battery and has conductivity. A design of a cross-sectional shape of the second electrode 220 may be varied to have any of various shapes in addition to the rectangular shape illustrated in FIG. 3.

A second active material layer may be applied on at least a portion of the second electrode 220. In an embodiment, the second active material layer may be applied on both, or opposite, surfaces of the second electrode 220. In another embodiment, the second active material layer may be applied on only one surface of the second electrode 220.

In an embodiment, the second electrode 220 functions as the negative electrode, and the second active material layer may include a negative electrode active material.

The negative electrode active material may include a material into which lithium ions may be reversibly intercalated and/or from which lithium ions may be reversibly deintercalated, a lithium metal, a lithium metal alloy, a material which may be doped in and undoped from lithium, or a transition metal oxide.

The material into which lithium ions may be reversibly intercalated and/or from which lithium ions may be reversibly deintercalated may include a carbon-based negative electrode active material, such as crystalline carbon, amorphous carbon, or a combination thereof. Examples of the crystalline carbon may be graphite, such as natural graphite or artificial graphite in amorphous, platy, flake, spherical, or fibrous form, and an example of the amorphous carbon may be soft or hard carbon, mesophase pitch carbide, fired coke, or the like.

An alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used as the lithium metal alloy.

A Si-based negative electrode active material or a Sn-based negative electrode active material may be used as the material which may be doped in and undoped from lithium. The Si-based negative electrode active material may be silicon, a silicon-carbon composite, SiOₓ (0<x≤2), a Si-Q alloy (Q is selected from the group consisting of alkaline metals, alkaline earth metals, Group 13 elements, Group 14 elements (excluding Si), Group 15 elements, Group 16 elements, transition metals, rare earth elements, and combinations thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may have a form including silicon particles of which surfaces are coated with amorphous carbon. For example, the silicon-carbon composite may include secondary particles (cores) in which silicon primary particles are assembled and an amorphous carbon coating layer (shell) located on the surface of the secondary particles. The amorphous carbon may also be located between the silicon primary particles such that, for example, the silicon primary particles may be coated with the amorphous carbon. The secondary particles may be dispersed and present in an amorphous carbon matrix.

The silicon-carbon composite may also further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used in combination with the carbon-based negative electrode active material.

In an embodiment, the second active material layer may further include a negative electrode conductive material and a negative electrode binder.

The negative electrode conductive material imparts conductivity to the second active material layer, and any suitable material that does not cause a chemical change and is electronically conductive may be used as the negative electrode conductive material. Examples of the negative electrode conductive material may be a carbon-based material, such as natural graphite, artificial graphite, carbon black, acetylene black, Ketjen black, carbon fibers, carbon nanofibers, and carbon nanotubes, a metal-based material in the form of a metal powder or metal fibers containing copper, nickel, aluminum, silver, and the like, a conductive polymer, such as a polyphenylene derivative, or a mixture thereof.

The negative electrode binder attaches particles constituting the negative electrode active material to each other well and attaches the negative electrode active material to the second electrode 220 well.

A non-aqueous binder, an aqueous binder, a dry binder, or a combination thereof may be used as an example of the negative electrode binder.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from the group consisting of styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, the first active material layer may further include a cellulose compound which provides viscosity. One or more of carboxymethyl cellulose, hydroxypropyl methyl cellulose, methyl cellulose, and alkaline metal salts thereof may be mixed and used as the cellulose compound. In an embodiment, Na, K, or Li may be used as an alkaline metal.

The dry binder is a polymer material capable of being fiberized, and may be, for example, polytetrafluoroethylene, polyvinylidene fluoride, a polyvinylidene fluoride-hexafluoropropylene copolymer, polyethylene oxide, or a combination thereof.

The second electrode 220 may include a second uncoated portion on which the second active material layer is not applied. The second uncoated portion according to an embodiment may be disposed in an upper end region of the second electrode 220 disposed to face the opening 160 in the case 101. However, the second uncoated portion is not limited thereto and, in an embodiment, may be formed on an entire edge region of the second electrode 220.

The separator 230 may be disposed between the first electrode 210 and the second electrode 220. The separator 230 may allow lithium-ions to move between the first electrode 210 and the second electrode 220 and prevent or substantially prevent a short circuit between the first electrode 210 and the second electrode 220.

In an embodiment, the separator 230 may be disposed to completely cover a surface region of the electrode assembly 200. Accordingly, the separator 230 may prevent or substantially prevent the first electrode 210 and the second electrode 220 from being directly exposed to the outside of the electrode assembly 200.

In an embodiment, polyethylene, polypropylene, polyvinylidene fluoride, or a multilayer film with two or more layers thereof may be used as the separator 230, and a mixed multilayer membrane such as a two-layer separator with polyethylene/polypropylene, a three-layer separator with polyethylene/polypropylene/polyethylene, or a three-layer separator with polypropylene/polyethylene/polypropylene may be used as the separator 230.

The separator 230 may include a porous substrate and a coating layer which is located on one surface or both, or opposite, surfaces of the porous substrate and includes an organic material, an inorganic material, or a combination thereof.

The porous substrate may be a polymer selected from the group consisting of polyolefins, such as polyethylene and polypropylene, polyesters, such as polyethylene terephthalate and polybutylene terephthalate, polyacetal, polyamide, polyimide, polycarbonate, polyetherketone, polyaryl etherketone, polyetherimide, polyamideimide, polybenzimidazole, polyethersulfone, polyphenylene oxide, cyclic olefin copolymers, polyphenylene sulfide, polyethylene naphthalate, glass fiber, and polytetrafluoroethylene (e.g., Teflon), or a polymer film formed of copolymers or mixtures of two or more thereof.

The organic material may include a polyvinylidene fluoride-based polymer or (meth)acrylic-based polymer.

The inorganic material may include inorganic particles selected from the group consisting of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite and a combination thereof, but is not limited thereto.

The organic material and the inorganic material may be present as a mixture in one coating layer or in a form in which a coating layer including an organic material and a coating layer including an inorganic material are stacked.

The electrode tabs 301 and 302 are connected to the electrode assembly 200. A first electrode tab 301 may be connected to the first electrode 210 and may protrude outward from the electrode assembly 200. In an embodiment, the first electrode 210 is the positive electrode, and the first electrode tab 301 may function as a positive electrode tab of the secondary battery 100. However, the first electrode tab 301 is not limited thereto, and if the first electrode 210 is the negative electrode, the first electrode tab 301 may function as a negative electrode tab of the secondary battery 100.

The first electrode tab 301 according to an embodiment may extend from the electrode assembly 200 in the third direction. That is, the first electrode tab 301 may extend toward the opening 160 of the case 101. The first electrode tab 301 according to an embodiment may include a first inner electrode tab 310 and a first outer electrode tab 320.

The first inner electrode tab 310 may be spaced apart from the first outer electrode tab 320 in the second direction. As an example, the first outer electrode tab 320 and the first inner electrode tab 310 may be sequentially disposed in the second direction. That is, the first outer electrode tab 320 may be disposed at a location spaced by a distance (e.g., a predetermined distance) from the first inner electrode tab 310 in the first direction. The first outer electrode tab 320 may be disposed at a location relatively closer from the side portion 140, which is disposed close to the first terminal 530, than the first inner electrode tab 310.

The first inner electrode tab 310 according to an embodiment may be an assembly of a plurality of first inner tabs 311 formed by notching first uncoated portions of the plurality of first electrodes 210. The first outer electrode tab 320 may be an assembly of a plurality of first outer tabs 321 formed by notching first uncoated portions of the plurality of first electrodes 210.

The secondary battery 100 according to an embodiment may further include a second electrode tab 302. The second electrode tab 302 may be connected to the second electrode 220 and extend outward from the electrode assembly 200. In an embodiment, the second electrode 220 is the negative electrode, and the second electrode tab 302 may function as the negative electrode tab of the secondary battery 100. However, the second electrode tab 302 is not limited thereto, and may function as the positive electrode tab of the secondary battery 100 if the second electrode 220 is the positive electrode.

The second electrode tab 302 according to an embodiment may extend from the electrode assembly 200 in the third direction. That is, the second electrode tab 302 may extend toward the opening 160 of the case 101.

The first electrode tab 301 may be disposed apart from the second electrode tab 302 in the second direction. As an example, the second electrode tab 302 may be disposed at a location spaced by a distance (e.g., a predetermined distance) from the first electrode tab 301 in the second direction.

The second electrode tab 302 according to an embodiment may include a second inner electrode tab 330 and a second outer electrode tab 340.

The second inner electrode tab 330 may be spaced apart from the second outer electrode tab 340 in the second direction. That is, the second outer electrode tab 340 may be disposed at a location spaced by a distance (e.g., a predetermined distance) from the second inner electrode tab 330 in the second direction. The second outer electrode tab 340 may be disposed at a location relatively closer from the side portion 140, which is disposed close to the second terminal 540, than the second inner electrode tab 330.

The second inner electrode tab 330 according to an embodiment may be an assembly of a plurality of second inner tabs 331 formed by notching second uncoated portions of the plurality of second electrodes 220. The second outer electrode tab 340 may be an assembly of a plurality of second outer tabs 341 formed by notching second uncoated portions of the plurality of second electrodes 220.

The cap plate 501 closes the opening 160 of the case 101. The terminals 530 and 540 are coupled to the cap plate 501. In an embodiment, the secondary battery 100 further includes a pair of gaskets 550 and 560, and the cap plate 501, the terminals 530 and 540, and the gaskets 550 and 560 constitute a cap assembly 500.

The cap assembly 500 may be coupled to the case 101 and may seal the case 101. The cap assembly 500 may be disposed to face the electrode assembly 200 in the third direction.

The cap plate 501 may be formed in a generally flat rectangular plate shape. The cap plate 501 may be disposed at a location spaced by a distance (e.g., a predetermined distance) from the electrode assembly 200 in the third direction. The cap plate 501 may be disposed to be parallel to the bottom portion of the case 101. The cap plate 501 may be coupled to the case 101 by any of various types of coupling methods, such as welding, bolting, and fitting methods.

The pair of terminals 530 and 540 are coupled to the cap plate 501. The pair of terminals 530 and 540 may include a first terminal 530 and a second terminal 540. The first terminal 530 and the second terminal 540 may be coupled to both, or opposite, end portions of the cap plate 501 in a longitudinal direction thereof to be spaced apart from each other.

The first terminal 530 may protrude outward from the cap plate 501. The first terminal 530 may be electrically connected to the first electrode 210. As the first electrode 210 according to an embodiment functions as the positive electrode, the first terminal 530 may be illustrated as a positive electrode terminal of the secondary battery 100.

The second terminal 540 may protrude outward from the cap plate 501. The second terminal 540 may be electrically connected to the second electrode 220. As the second electrode 220 according to an embodiment functions as the negative electrode, the second terminal 540 may be illustrated as a negative electrode terminal of the secondary battery 100.

Upper end portions of the pair of terminals 530 and 540 may protrude from the cap plate 501 in the third direction. In the drawings, although an example of the pair of terminals 530 and 540 each having a rectangular cross-sectional shape is illustrated, a transverse cross-sectional shape of each of the pair of terminals 530 and 540 is not limited thereto, and the transverse cross-sectional shape may be varied to any of various shapes, such as a circular shape, an elliptical shape, and a polygonal shape. The pair of terminals 530 and 540 may be formed of an electrically conductive material, such as aluminum, nickel, or copper.

The first terminal 530 may include a thick portion 531 and a thin portion 533 having a thickness that is smaller than that of the thick portion 531 in the third direction. The thin portion 533 may be formed in a central portion of the first terminal 530. As illustrated in FIG. 4, the thin portion 533 may be aligned with and welded to a first contact protrusion 411 of the current collecting member 400A.

Like the first terminal 530, the second terminal 540 may also include a thick portion and a thin portion having a thickness that is smaller than that of the thick portion in the third direction. Like the first terminal 530, the thin portion of the second terminal 540 may be aligned with and coupled to the first contact protrusion 411 of the current collecting member 400A.

A through hole through which the first contact protrusion 411 passes may be formed in the cap plate 501 such that the first contact protrusion 411 passes through the cap plate 501 and is welded to the thin portion 533.

The pair of gaskets 550 and 560 may electrically insulate the cap plate 501 from the pair of terminals 530 and 540 and prevent or substantially prevent moisture or foreign matter from being introduced between the cap plate 501 and the pair of terminals 530 and 540.

Each of the pair of gaskets 550 and 560 may include an insulation material. For example, each of the pair of gaskets 550 and 560 may be formed of an insulation material, such as polyethylene (PE), polypropylene (PP), polyethylene terephthalate (PET), or rubber. The pair of gaskets 550 and 560 may be fixed between the cap plate 501 and the pair of terminals 530 and 540 through press fitting, injection, adhesion, or the like.

The cap assembly 500 according to an embodiment may further include a vent hole 505 and a cell vent 520.

The vent hole 505 may be formed to have a hole shape passing through the cap plate 501 in the third direction. The vent hole 505 may provide a passage through which a flame, gas, smoke, and the like generated in the case 101 are discharged to the outside of the case 101 if thermal runaway occurs in the secondary battery 100 due to overcurrent or the like. The vent hole 505 may be disposed between the first terminal 530 and the second terminal 540. A design of a cross-sectional shape of the vent hole 505 may be varied to any of various shapes, such as an elliptical shape, a circular shape, and a polygonal shape.

The cell vent 520 may be installed in the vent hole 505 and opened or closed in conjunction with a change in internal pressure of the case 101. That is, the cell vent 520 may block an electrolyte or the like in the case 101 from being discharged to the outside of the case 101 or block moisture, foreign matter, or the like from being introduced into the case 101 by closing the vent hole 505 when the secondary battery 100 operates normally. The cell vent 520 may induce the flame, gas, smoke, or the like generated in the case 101 to be discharged to the outside of the case 101 by opening the vent hole 505 if the thermal runaway occurs in the secondary battery 100.

In an embodiment, the cell vent 520 may be formed in a plate shape. The cell vent 520 may be fixed to the cap plate 501 through any of various types of coupling methods, such as welding, bolting, and fitting methods. The cell vent 520 may be disposed in the vent hole 505 or disposed above or below the cap plate 501 to face the vent hole 505 in the third direction.

In an embodiment, a thickness of the cell vent 520 in the third direction may be smaller than a thickness of the cap plate 501. Accordingly, when an internal pressure of the case 101 increases, the cell vent 520 may be easily broken or ruptured. In an embodiment, the cell vent 520 may include a notch concavely formed inward from the cell vent 520 to be ruptured first if the internal pressure of the case 101 increases.

The cap assembly 500 may further include an electrolyte injection hole 508 formed to pass through the cap plate 501 and a sealing plug 525 which closes the electrolyte injection hole 508 such that the sealing plug 525 may open the electrolyte injection hole 508. The electrolyte injection hole 508 may be disposed apart from the vent hole 505 in a longitudinal direction of the cap plate 501. The electrolyte injection hole 508 may be disposed between the first terminal 530 and the second terminal 540.

The cap assembly 500 according to an embodiment may further include an insulator 570.

The insulator 570 may be located between the cap plate 501 and the electrode assembly 200. The insulator 570 may insulate the cap plate 501 from the electrode assembly 200 by preventing or substantially preventing direct contact between the cap plate 501 and the electrode assembly 200. The insulator 570 may fix a location of the electrode assembly 200 in the case 101. If the cap plate 501 is deformed inward from the case 101 due to an external impact or the like, the insulator 570 may prevent or substantially prevent the electrode assembly 200 from being broken.

The insulator 570 may be disposed to face the electrode assembly 200 in the third direction in the case 101. That is, the electrode assembly 200, the insulator 570, and the cap plate 501 may be sequentially disposed in the third direction.

The insulator 570 may include an insulation material. For example, the insulator 570 may be formed of an insulating material, such as PE, PP, PET, or rubber.

The insulator 570 may include a body 571 and an insulation reinforcement layer 580. The body 571 may include a base portion 572 extending in the second direction to overlap the cap plate 501 in the third direction, a skirt portion 577 bent from an outer corner of the base portion 572 to protrude toward the electrode assembly 200, and a spacer portion 573 which protrudes from the base portion 572 to be in contact with the cap plate 501 and separates the base portion 572 from the cap plate 501. In an embodiment, the body 571 may be integrally formed through a method such as injection forming.

The insulation reinforcement layer 580 is stacked on the base portion 572. In an embodiment, for example, a film including an insulation material may be attached to the base portion 572 using an adhesive tape or an adhesive to form the insulation reinforcement layer 580. In another embodiment, a coating agent including an insulation material may be applied on the base portion 572 and cured to form the insulation reinforcement layer 580. Even if the current collecting member 400A collides with the insulator 570 due to an external impact applied to the secondary battery 100, the insulator 570 may not be broken due to the insulation reinforcement layer 580. Accordingly, a short circuit between the current collecting member 400A and the cap plate 501 and a fire accident due to a short circuit can be prevented or substantially prevented.

The current collecting member 400A is provided as a pair of current collecting members 400A to match the pair of terminals 530 and 540 one-to-one. The current collecting member 400A may include a plate portion 401, a terminal coupling part, and a heat capacity increasing part. The plate portion 401 is coupled to each of the electrode tabs 301 and 302 such that a current flows therebetween. The current collecting member 400A corresponding to the first terminal 530 may be coupled to the first electrode tab 301, and the current collecting member 400A corresponding to the second terminal 540 may be coupled to the second electrode tab 302. Herein, the current collecting member 400A coupled to the first terminal 530 and the first electrode tab 301 will be described in further detail.

The plate portion 401 includes a first plate portion 403 located to overlap the first terminal 530 in the third direction and a second plate portion 405 which extends to be stepped from the first plate portion 403 and is coupled to the first electrode tab 301. The second plate portion 405 may be provided as a pair of second plate portions 405. The pair of second plate portions 405 may be disposed one-to-one at both, or opposite, sides of the first plate portion 403 with the first plate portion 403 interposed therebetween. The plate portion 401 may extend in the second direction.

The terminal coupling part protrudes from the plate portion 401 to be coupled to the first terminal 530 such that a current flows therebetween. The terminal coupling part may include the first contact protrusion 411 protruding from the first plate portion 403 to be coupled to the first terminal 530. The first contact protrusion 411 may extend in the third direction. In an embodiment, a cross-sectional shape of the first contact protrusion 411 may be a circular shape. As described above, the thin portion 533 of the first terminal 530 may be coupled to the first contact protrusion 411 through welding.

The heat capacity increasing part protrudes from the plate portion 401 without coming in contact with a portion of the cap plate 501 and the first terminal 530. The heat capacity increasing part may include a first non-contact protrusion 421 protruding from the second plate portion 405 toward the cap plate 501. For example, the first non-contact protrusion 421 may be provided as a pair of first non-contact protrusions 421 disposed one-to-one on the pair of second plate portions 405.

The second plate portion 405 may be welded to the first electrode tab 301. For example, the first inner electrode tab 310 belonging to the first electrode tab 301 may be coupled to a second plate portion 405 closer to the vent hole 505 among the pair of second plate portions 405 through welding, and the first outer electrode tab 320 may be coupled to the other second plate portion 405 through welding.

The second plate portion 405 may include welded portions 407 formed at portions to which each of the electrode tabs 310 and 320 is welded. The welded portions 407 may be formed to extend in straight line shapes in the first direction and to be spaced apart from each other in the second direction.

The first non-contact protrusion 421 may protrude from the second plate portion 405 to avoid the welded portion 407. The first non-contact protrusion 421 may be located to be biased to a side in a width direction of the second plate portion 405. For example, based on FIG. 6, the welded portion 407 formed by being welded to the first inner electrode tab 310 is located to be biased in a negative (-) direction of the X-axis, and the welded portion 407 formed by being welded to the first outer electrode tab 320 is located to be biased in a positive (+) direction of the X-axis.

Accordingly, the first non-contact protrusion 421 protruding from the second plate portion 405 closer to the vent hole 505 among the pair of second plate portions 405 may be located to be biased in the positive (+) direction of the X-axis, and the first non-contact protrusion 421 protruding from the other second plate portion 405 may be located to be biased in the negative (-) direction of the X-axis.

The first non-contact protrusion 421 may extend to be parallel to a longitudinal direction of the second plate portion 405. In the embodiment illustrated in FIGS. 5 and 6, a longitudinal direction of the plate portion 401 and the longitudinal direction of the second plate portion 405 may be parallel to the second direction, and a width direction of the plate portion 401 and the width direction of the second plate portion 405 may be parallel to the first direction.

The first non-contact protrusion 421 may be provided as a total of the pair of first non-contact protrusions 421 disposed one-to-one on the pair of second plate portions 405. In an embodiment, the pair of first non-contact protrusions 421 may be symmetrically located around the first contact protrusion 411.

The heat capacity increasing part may further include a second non-contact protrusion 425 which protrudes from the first plate portion 403 toward the terminal 530 to avoid the first contact protrusion 411. The second non-contact protrusion 425 may extend to be parallel to the longitudinal direction of the plate portion 401.

The second non-contact protrusion 425 may be provided as a plurality of second non-contact protrusions 425. For example, the second non-contact protrusion 425 may be provided as a pair of second non-contact protrusions 425. In an embodiment, the plurality of second non-contact protrusions 425 may be symmetrically located around the first contact protrusion 411.

In the pair of current collecting members 400A included in the secondary battery 100, one current collecting member 400A coupled to the first terminal 530 and the first inner electrode tab 310 and the first outer electrode tab 320 of the first electrode tab 301 has been described above in further detail. However, the other current collecting member 400A may be the same as the above-described current collecting member 400A except that it is connected to the second terminal 540 and the second inner electrode tab 330 and the second outer electrode tab 340 of the second electrode tab 302, and repeated description thereof will be omitted.

The current collecting member 400A illustrated in FIGS. 5 and 6 includes the heat capacity increasing part, such that the heat capacity is increased, and, thus, the heat generation of the current collecting member 400A in the secondary battery 100 is reduced. Accordingly, overheating and a fire due to the overheating in the secondary battery 100 can be prevented or substantially prevented during charging or discharging thereof.

Referring to FIGS. 1 to 4, 7, and 8, a secondary battery 100 of the present disclosure may include a current collecting member 400B illustrated in FIGS. 7 and 8 instead of the current collecting member 400A illustrated in FIGS. 2 and 4.

The current collecting member 400B is provided as a pair of current collecting members 400B to correspond one-to-one to a pair of terminals 530 and 540. The current collecting member 400B includes a plate portion 401, a terminal coupling part, and a heat capacity increasing part. The plate portion 401 is coupled to each of electrode tabs 301 and 302 such that a current flows therebetween. The current collecting member 400B corresponding to a first terminal 530 may be coupled to a first electrode tab 301, and the current collecting member 400B corresponding to a second terminal 540 may be coupled to a second electrode tab 302. Herein, the current collecting member 400B coupled to the first terminal 530 and the first electrode tab 301 will be described in further detail.

The plate portion 401 includes a first plate portion 403 located to overlap the first terminal 530 in a third direction and a second plate portion 405 which extends to be stepped from the first plate portion 403 and is coupled to the first electrode tab 301. The second plate portion 405 may be provided as a pair of second plate portions 405. The pair of second plate portions 405 may be disposed one-to-one at both, or opposite, sides of the first plate portion 403 with the first plate portion 403 interposed therebetween. The plate portion 401 may extend in a second direction.

The terminal coupling part protrudes from the plate portion 401 to be coupled to the first terminal 530 such that a current flows therebetween. The terminal coupling part may include a first contact protrusion 411 protruding from the first plate portion 403 to be coupled to the first terminal 530. The first contact protrusion 411 may extend in the third direction. In an embodiment, a cross-sectional shape of the first contact protrusion 411 may be a circular shape. As described above, a thin portion 533 of the first terminal 530 may be coupled to the first contact protrusion 411 through welding.

The heat capacity increasing part protrudes from the plate portion 401 without coming in contact with a portion of the cap plate 501 and the first terminal 530. The heat capacity increasing part may include a first non-contact protrusion 431 protruding from the second plate portion 405 toward the cap plate 501. For example, the first non-contact protrusion 431 may be provided as a plurality of first non-contact protrusions 431 disposed one-to-one on the second plate portions 405.

The second plate portion 405 may be welded to the first electrode tab 301. For example, a first inner electrode tab 310 of the first electrode tab 301 may be coupled to a second plate portion 405 closer to a vent hole 505 among the pair of second plate portions 405 through welding, and a first outer electrode tab 320 may be coupled to the other second plate portion 405 through welding.

The second plate portion 405 may include welded portions 407 formed at portions to which the electrode tabs 310 and 320 are welded. In an embodiment, the welded portions 407 may be formed to extend in straight line shapes in a first direction and to be spaced apart from each other in the second direction.

The first non-contact protrusion 431 may protrude from the second plate portion 405 to avoid the welded portion 407. The first non-contact protrusion 431 may be located to be biased to a side in a width direction of the second plate portion 405. For example, based on FIG. 8, the welded portion 407 formed by being welded to the first inner electrode tab 310 may be located to be biased in a negative (-) direction of an X-axis, and the welded portion 407 formed by being welded to the first outer electrode tab 320 may be located to be biased in a positive (+) direction of the X-axis.

Accordingly, the first non-contact protrusion 431 protruding from a second plate portion 405 closer to the vent hole 505 among the pair of second plate portions 405 may be located to be biased in the positive (+) direction of the X-axis, and the first non-contact protrusion 431 protruding from the other second plate portion 405 may be located to be biased in the negative (-) direction of the X-axis.

The first non-contact protrusion 431 may extend in the third direction. A cross-sectional shape of the first non-contact protrusion 431 may be, for example, a circular shape. In an embodiment illustrated in FIGS. 7 and 8, a longitudinal direction of the plate portion 401 and a longitudinal direction of the second plate portion 405 may be parallel to the second direction, and a width direction of the plate portion 401 and the width direction of the second plate portion 405 may be parallel to the first direction.

The plurality of first non-contact protrusions 431 located on the second plate portions 405 may be arrayed in the longitudinal direction of the second plate portions 405. In an embodiment, the plurality of first non-contact protrusions 431 may be symmetrically located around the first contact protrusion 411.

The heat capacity increasing part may further include a second non-contact protrusion 435 which protrudes from the first plate portion 403 toward the terminal 530 to avoid, or be spaced apart from, the first contact protrusion 411. The second non-contact protrusion 435 may extend in the third direction. A cross-sectional shape of the second non-contact protrusion 435 may be, for example, a circular shape.

The second non-contact protrusion 435 may be provided as a plurality of second non-contact protrusions 435. The plurality of second non-contact protrusions 435 may be arrayed in the longitudinal direction of the plate portion 401. In an embodiment, the plurality of second non-contact protrusions 435 may be symmetrically located around the first contact protrusion 411.

In the pair of current collecting members 400B included in the secondary battery 100, a current collecting member 400B coupled to the first terminal 530 and the first inner electrode tab 310 and the first outer electrode tab 320 of the first electrode tab 301 has been described above. In an embodiment, another current collecting member 400B is the same as the above-described current collecting member 400B except that it is connected to the second terminal 540 and a second inner electrode tab 330 and a second outer electrode tab 340 of the second electrode tab 302, and repeated description thereof will be omitted.

The current collecting member 400B illustrated in FIGS. 7 and 8 includes the heat capacity increasing part, such that the heat capacity is increased, and, thus, the heat generation of the current collecting member 400B in the secondary battery 100 is reduced. Accordingly, overheating and a fire due to the overheating in the secondary battery 100 can be prevented or substantially prevented during charging or discharging thereof.

Referring to FIGS. 1 to 4, 9, and 10, a secondary battery 100 of the present disclosure may include a current collecting member 400C illustrated in FIGS. 9 and 10 instead of the current collecting member 400A illustrated in FIGS. 2 and 4.

The current collecting member 400C is provided as a pair of current collecting members 400C to correspond one-to-one to a pair of terminals included in the secondary battery 100. The current collecting member 400C includes a plate portion 401, a terminal coupling part, and a heat capacity increasing part. The plate portion 401 is coupled to each of electrode tabs 301 and 302 such that a current flows therebetween. The pair of terminals include a first terminal 530A and a second terminal (not shown).

The current collecting member 400C corresponding to the first terminal 530A may be coupled to a first electrode tab 301, and the current collecting member 400C corresponding to the second terminal may be coupled to a second electrode tab 302. Herein, the current collecting member 400C coupled to the first terminal 530A and the first electrode tab 301 will be described in further detail.

A plate portion 401 includes a first plate portion 403 located to overlap the first terminal 530A in a third direction and a second plate portion 405 which extends to be stepped from the first plate portion 403 and is coupled to the first electrode tab 301. The second plate portion 405 may be provided as a pair of second plate portions 405. The pair of second plate portions 405 may be disposed one-to-one at both, or opposite, sides of the first plate portion 403 with the first plate portion 403 interposed therebetween. The plate portion 401 may extend in a second direction.

The terminal coupling part protrudes from the plate portion 401 to be coupled to the first terminal 530A such that a current flows therebetween. The terminal coupling part may include a first contact protrusion 411 protruding from the first plate portion 403 to be coupled to the first terminal 530A. The first contact protrusion 411 may extend in the third direction. In an embodiment, a cross-sectional shape of the first contact protrusion 411 may be a circular shape. As described above, a thin portion 533 of the first terminal 530A may be coupled to the first contact protrusion 411 through welding.

The terminal coupling part further includes a second contact protrusion 414 which protrudes from the first plate portion 403 to avoid the first contact protrusion 411 and to be coupled to the terminal 530A. The second terminal 530A may include a protrusion through hole 535 into which an end portion of the second contact protrusion 414 is inserted. In an embodiment, the end portion of the second contact protrusion 414 inserted into the protrusion through hole 535 is welded to an inner surface of the protrusion through hole 535, and the second contact protrusion 414 and the first terminal 530A may be coupled such that a current flows therebetween.

The second contact protrusion 414 may extend in a longitudinal direction of the plate portion 401. A planar shape of the second contact protrusion 414 may be, for example, a quadrangular shape which is long in a direction parallel to the longitudinal direction of the plate portion 401. The protrusion through hole 535 may be a long hole extending a length corresponding to a cross-sectional shape of the second contact protrusion 414.

In an embodiment, an end portion of the second contact protrusion 414 in a positive (+) direction of a Z-axis may be fitted into the protrusion through hole 535 and fixed to the inner surface of the protrusion through hole 535 through welding.

The second contact protrusion 414 may be provided as a plurality of second contact protrusions 414. For example, the second contact protrusion 414 may be provided as a pair of second contact protrusions 414. In an embodiment, the pair of second contact protrusions 414 may be symmetrically located around the first contact protrusion 411. The pair of second contact protrusions 414 may be located on both, or opposite, end portions of the plate portion 401 in a width direction.

The heat capacity increasing part protrudes from the plate portion 401 without coming in contact with a portion of the cap plate 501 and the first terminal 530A. The heat capacity increasing part may include a first non-contact protrusion 421 protruding from the second plate portion 405 toward the cap plate 501. For example, the first non-contact protrusion 421 may be provided as a pair of first non-contact protrusions 421 disposed one-to-one on the pair of second plate portions 405.

The second plate portion 405 may be welded to the first electrode tab 301. For example, a first inner electrode tab 310 of the first electrode tab 301 may be coupled to a second plate portion 405 closer to a vent hole 505 among the pair of second plate portions 405 through welding, and a first outer electrode tab 320 may be coupled to the other second plate portion 405 through welding.

The second plate portion 405 may include welded portions 407 formed at portions to which to the electrode tabs 310 and 320 are welded. In an embodiment, the welded portions 407 may be formed to extend in straight line shapes in a first direction and to be spaced apart from each other in the second direction.

The first non-contact protrusion 421 may protrude from the second plate portion 405 to avoid the welded portion 407. The first non-contact protrusion 421 may be located to be biased to a side in a width direction of the second plate portion 405. For example, based on FIG. 10, the welded portion 407 formed by being welded to the first inner electrode tab 310 is located to be biased in a negative (-) direction of an X-axis, and the welded portion 407 formed by being welded to the first outer electrode tab 320 is located to be biased in a positive (+) direction of the X-axis.

Accordingly, the first non-contact protrusion 421 protruding from a second plate portion 405 closer to the vent hole 505 among the pair of second plate portions 405 may be located to be biased in the positive (+) direction of the X-axis, and the first non-contact protrusion 421 protruding from the other second plate portion 405 may be located to be biased in the negative (-) direction of the X-axis.

The first non-contact protrusion 421 may be provided as a total of the pair of first non-contact protrusions 421 disposed one-to-one on the pair of second plate portions 405. In an embodiment, the pair of first non-contact protrusions 421 may be symmetrically located around the first contact protrusion 411.

In the pair of current collecting members 400C included in the secondary battery 100, a current collecting member 400C coupled to the first terminal 530A and the first inner electrode tab 310 and the first outer electrode tab 320 of the first electrode tab 301 has been described above. In an embodiment, the remaining current collecting member 400C may be the same as the above-described current collecting member 400C except that it is connected to the second terminal and a second inner electrode tab 330 and a second outer electrode tab 340 of the second electrode tab 302, and repeated description thereof will be omitted.

The current collecting member 400C illustrated in FIGS. 9 and 10 includes the heat capacity increasing part, such that the heat capacity is increased, and, thus, the heat generation of the current collecting member 400C in the secondary battery 100 is reduced. Accordingly, overheating and a fire due to the overheating in the secondary battery 100 can be prevented or substantially prevented during charging or discharging thereof.

In addition, in the current collecting member 400C, as the terminal coupling part includes the second contact protrusion 414, a larger current can easily flow between the terminal 530A and the current collecting member 400C. Accordingly, the heat generation of the current collecting member 400C can be reduced further, and the secondary battery can be more quickly charged or discharged.

Referring to FIGS. 1 to 4, 11, and 12, a secondary battery 100 of the present invention may include a current collecting member 400D illustrated in FIGS. 11 and 12 instead of the current collecting member 400A illustrated in FIGS. 2 and 4.

The current collecting member 400D is provided as a pair of current collecting members 400D to correspond one-to-one to a pair of terminals included in the secondary battery 100. The current collecting member 400D includes a plate portion 401, a terminal coupling part, and a heat capacity increasing part. The plate portion 401 is coupled to each of electrode tabs 301 and 302 such that a current flows therebetween. The pair of terminals include a first terminal 530B and a second terminal (not shown).

The current collecting member 400D corresponding to the first terminal 530B may be coupled to a first electrode tab 301, and the current collecting member 400D corresponding to the second terminal may be coupled to a second electrode tab 302. Herein, the current collecting member 400D coupled to the first terminal 530B and the first electrode tab 301 will be described in further detail.

The plate portion 401 includes a first plate portion 403 located to overlap the first terminal 530B in a third direction and a second plate portion 405 which extends to be stepped from the first plate portion 403 and is coupled to the first electrode tab 301. The second plate portion 405 may be provided as a pair of second plate portions 405. The pair of second plate portions 405 may be disposed one-to-one at both, or opposite, sides of the first plate portion 403 with the first plate portion 403 interposed therebetween. The plate portion 401 may extend in a second direction.

The terminal coupling part protrudes from the plate portion 401 to be coupled to the first terminal 530B such that a current flows therebetween. The terminal coupling part may include a first contact protrusion 411 protruding from the first plate portion 403 to be coupled to the first terminal 530B. The first contact protrusion 411 may extend in the third direction. In an embodiment, a cross-sectional shape of the first contact protrusion 411 may be a circular shape. As described above, a thin portion 533 of the first terminal 530B may be coupled to the first contact protrusion 411 through welding.

The terminal coupling part further includes a second contact protrusion 417 which protrudes from the first plate portion 403 to avoid the first contact protrusion 411 and to be coupled to the terminal 530B. The first terminal 530B may include a protrusion through hole 537 into which an end portion of the second contact protrusion 417 is inserted. In an embodiment, the end portion of the second contact protrusion 417 inserted into the protrusion through hole 537 is welded to an inner surface of the protrusion through hole 537, and the second contact protrusion 417 and the first terminal 530B may be coupled such that a current flows therebetween.

The second contact protrusion 417 may extend in the third direction to be in contact with the first terminal 530B. A cross-sectional shape of the second contact protrusion 417 may be, for example, a circular shape. The protrusion through hole 537 may be a circular through hole corresponding to the cross-sectional shape of the second contact protrusion 417.

An end portion of the second contact protrusion 417 in a positive (+) direction of a Z-axis may be fitted into the protrusion through hole 537 and fixed to the inner surface of the protrusion through hole 537 through welding.

The second contact protrusion 417 may be provided as a plurality of second contact protrusions 417 disposed apart from each other. In an embodiment, the plurality of second contact protrusions 417 may be symmetrically located around the first contact protrusion 411. In an embodiment, a same number of the plurality of second contact protrusions 417 may be arranged at both, or opposite, end portions of the plate portion 401 in a width direction thereof.

The heat capacity increasing part protrudes from the plate portion 401 without coming in contact with a portion of the cap plate 501 and the first terminal 530B. The heat capacity increasing part may include a first non-contact protrusion 431 protruding from the second plate portion 405 toward the cap plate 501. For example, the first non-contact protrusion 431 may be provided as a plurality of first non-contact protrusions 431 disposed one-to-one on the second plate portions 405.

The second plate portion 405 may be welded to the first electrode tab 301. For example, a first inner electrode tab 310 of the first electrode tab 301 may be coupled to a second plate portion 405 closer to the vent hole 505 among the pair of second plate portions 405 through welding, and a first outer electrode tab 320 may be coupled to the other second plate portion 405 through welding.

The second plate portion 405 may include welded portions 407 formed at portions to which the electrode tabs 310 and 320 are welded. In an embodiment, the welded portions 407 may be formed to extend in straight line shapes in a first direction and to be spaced apart from each other in the second direction.

The first non-contact protrusion 431 may protrude from the second plate portion 405 to avoid the welded portion 407. The first non-contact protrusion 431 may be located to be biased to a side in a width direction of the second plate portion 405. For example, based on FIG. 12, the welded portion 407 formed by being welded to the first inner electrode tab 310 is located to be biased in a negative (-) direction of an X-axis, and the welded portion 407 formed by being welded to the first outer electrode tab 320 is located to be biased in a positive (+) direction of the X-axis.

Accordingly, the first non-contact protrusion 431 protruding from a second plate portion 405 closer to the vent hole 505 among the pair of second plate portions 405 may be located to be biased in the positive (+) direction of the X-axis, and the first non-contact protrusion 431 protruding from the other second plate portion 405 may be located to be biased in the negative (-) direction of the X-axis.

The first non-contact protrusion 431 may extend in the third direction. A cross-sectional shape of the first non-contact protrusion 431 may be, for example, a circular shape. The plurality of first non-contact protrusions 431 located on the second plate portions 405 may be arrayed in a longitudinal direction of the second plate portion 405. In an embodiment, the plurality of first non-contact protrusions 431 may be symmetrically located around the first contact protrusion 411.

In the pair of current collecting members 400D included in the secondary battery 100, a current collecting member 400D coupled to the first terminal 530B and the first inner electrode tab 310 and the first outer electrode tab 320 of the first electrode tab 301 has been described above. The other current collecting member 400D may be the same as the above-described current collecting member 400D except that it is connected to the second terminal and a second inner electrode tab 330 and a second outer electrode tab 340 of the second electrode tab 302, and repeated description thereof will be omitted.

The current collecting member 400D illustrated in FIGS. 11 and 12 includes the heat capacity increasing part, such that the heat capacity is increased, and, thus, the heat generation of the current collecting member 400D in the secondary battery 100 is reduced. Accordingly, overheating and a fire due to the overheating in the secondary battery 100 can be prevented or substantially prevented during charging or discharging thereof.

In addition, in the current collecting member 400D, as the terminal coupling part includes the second contact protrusion 417, a larger current can easily flow between the terminal 530B and the current collecting member 400D. Accordingly, the heat generation of the current collecting member 400C can be reduced further, and the secondary battery can be more quickly charged or discharged.

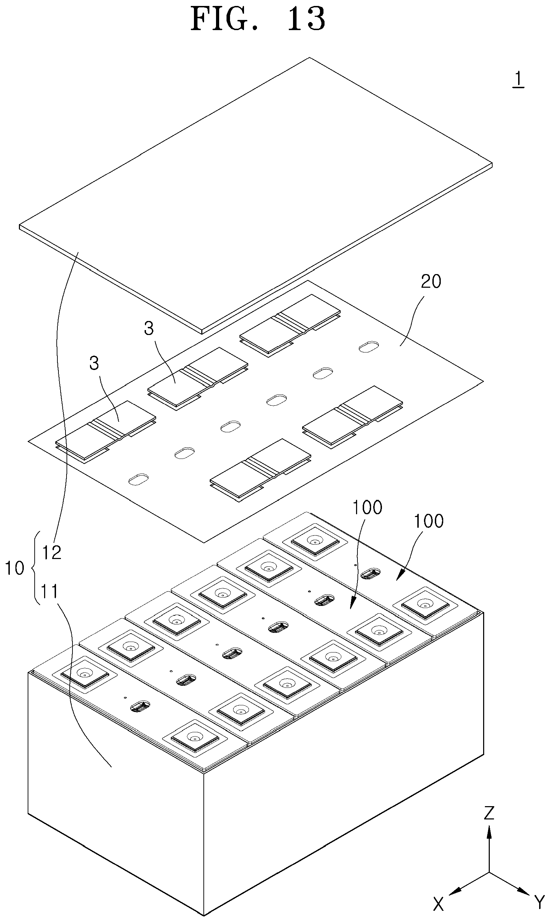

FIG. 13 is a schematic perspective view illustrating a structure of a battery pack according to an embodiment of the present invention. Referring to FIGS. 1 and 13, a battery pack 1 according to an embodiment of the present invention may include a housing 10, a secondary battery 100, and a busbar 3.

The housing 10 may form an overall exterior of the battery pack 1 and provide a space in which the secondary battery 100 may be accommodated.

The housing 10 according to an embodiment may include a housing body 11 and a cover 12. The housing body 11 may be formed in a hollow box shape with an open side. However, a cross-sectional shape of the housing body 11 is not limited to the quadrangular shape illustrated in FIG. 13, and a design of a shape of the housing body 11 may be changed to any of various shapes, such as a polygonal shape, a circular shape, and an elliptical shape.

The cover 12 may be coupled to the housing body 11 and may close an inner space of the housing body 11. As an example, the cover 12 may be formed in a generally plate shape to face the open side of the housing body 11. The cover 12 may be fixed to the housing body 11 through any of various coupling methods, such as bolting, welding, and fitting.

The secondary battery 100 may function as a unit structure for storing and supplying power in the battery pack 1.

The secondary battery 100 may be provided as a plurality of secondary batteries 100. The plurality of secondary batteries 100 may be disposed in two or more rows in any direction of a longitudinal direction (an X-axis direction based on FIG. 13) or a width direction (a Y-axis direction based on FIG. 13) of the housing 10. Although FIG. 13 shows an example in which the plurality of secondary batteries 100 are disposed in six rows in the longitudinal direction of the housing 10, an array form of the plurality of secondary batteries 100 is not limited thereto, and a design thereof may be variously changed. The plurality of secondary batteries 100 may be disposed to be parallel to each other. A design of the number of secondary batteries 100 may be variously changed depending on a size, shape, and the like of the housing 10.

In a pair of adjacent secondary batteries 100, a first terminal 530 of a secondary battery 100 and a second terminal 540 of another secondary battery 100 may be disposed to face each other in the longitudinal direction of the housing 10. That is, in the adjacent secondary batteries 100, a front portion 120 of a secondary battery 100 may be disposed to face a rear portion 130 of another secondary battery 100.

The plurality of secondary batteries 100 may be electrically connected through a busbar 3.

The busbar 3 according to an embodiment may be disposed between the cover 12 and the secondary battery 100. The busbar 3 may be provided as a plurality of busbars 3. Each of the busbars 3 may connect a pair of adjacent secondary batteries 100 in series or in parallel.

As an example, the busbar 3 may be connected to the first terminal 530 (see FIG. 1) of one of the pair of adjacent secondary batteries 100 and the second terminal 540 (see FIG. 1) of another thereof. Accordingly, the plurality of secondary batteries 100 may be connected in series through the busbar 3.

However, the connecting form of the busbar 3 is not limited thereto, and both, or opposite, sides of the busbar 3 may be connected to the first terminal 530 of any of the pair of adjacent secondary batteries 100 and the second terminal 540 of the other thereof, or connected to the second terminal 540 of any of the pair of adjacent secondary batteries 100 and the second terminal 540 of the other thereof.

The busbar 3 may be formed of an electrically conductive material, such as copper, aluminum, or nickel. However, a specific shape of the busbar 3 is not limited to the shape illustrated in FIG. 13, and a design thereof may be variously changed to electrically connect the adjacent secondary batteries 100.

The plurality of busbars 3 may be supported by a busbar holder 20 in the housing 10.

The busbar holder 20 according to an embodiment may be formed in a flat plate shape. The busbar holder 20 may be disposed between the cover 12 and the secondary battery 100. The busbar 3 may be fixed to the busbar holder 20 through any of various types of coupling methods, such as fitting, bolting, and injection molding. In an embodiment, the busbar holder 20 may be formed of an electrically insulative polymer compound material.

According to embodiments of the present invention, a heat capacity of a current collecting member is improved to reduce heat generation of the current collecting member in a secondary battery. Accordingly, overheating and a fire due to the overheating in the secondary battery can be prevented or substantially prevented during charging or discharging thereof.

However, aspects and features of the present invention are not limited to those described above and other aspects and features not mentioned will be clearly understood by those skilled in the art from the detailed description provided above.

Although the present invention has been described with reference to some embodiments and drawings illustrating aspects thereof, the present invention is not limited thereto. Various modifications and variations can be made by a person skilled in the art to which the present invention belongs within the scope of the invention as defined by the appended claims.

## Claims

1. A secondary battery (100) comprising:
a case (101) comprising an opening (160);
an electrode assembly (200) accommodated in the case (101);
an electrode tab (301, 302, 310, 320) connected to the electrode assembly (200);
a cap plate (501) closing the opening (160);
a terminal (530, 540) coupled to the cap plate (501); and
a current collecting member (400A, 400B, 400C, 400D) comprising a plate portion (401) coupled to the electrode tab (301, 302, 310, 320) and configured to allow a current flow therebetween, a terminal coupling part protruding from the plate portion (401) to be coupled to the terminal (530, 540) and configured to allow a current flow therebetween, and a heat capacity increasing part protruding from the plate portion (401) without contacting a portion of the cap plate (501) and the terminal (530, 540).

2. The secondary battery (100) as claimed in claim 1, wherein the plate portion (401) comprises:
a first plate portion (403) overlapping the terminal (530, 540); and
a second plate portion (405) extending to be stepped from the first plate portion (403) and coupled to the electrode tab (301, 302, 310, 320),
wherein the terminal coupling part comprises a first contact protrusion (411) protruding from the first plate portion (403) to be coupled to the terminal (530, 540).

3. The secondary battery (100) as claimed in claim 2, wherein
the terminal (530, 540) comprises a thick portion (531) and a thin portion (533) that is thinner than the thick portion (531), and
the thin portion (533) is welded to the first contact protrusion (411).

4. The secondary battery (100) as claimed in claim 2 or 3, wherein the terminal coupling part further comprises a second contact protrusion (414, 417) protruding from the first plate portion (403) to avoid the first contact protrusion (411) and to be coupled to the terminal (530, 540).

5. The secondary battery (100) as claimed in claim 4, wherein
the terminal (530, 540) comprises a protrusion through hole (535, 537) in which an end portion of the second contact protrusion (414, 417) is inserted, and
the end portion of the second contact protrusion (414, 417) inserted in the protrusion through hole (535, 537) is welded to an inner surface of the protrusion through hole (535, 537).

6. The secondary battery (100) as claimed in claim 4 or 5, wherein
the second contact protrusion (414, 417) comprises a plurality of second contact protrusions (414, 417), and
the plurality of second contact protrusions (414, 417) are symmetrically located around the first contact protrusion (411).

7. The secondary battery (100) as claimed in any one of claims 4 to 6, wherein
the second contact protrusion (414, 417) comprises a plurality of second contact protrusions (414, 417), and
the plurality of second contact protrusions (414, 417) are located at opposite end portions of the plate portion (401) in a width direction.

8. The secondary battery (100) as claimed in any one of claims 2 to 7, wherein the heat capacity increasing part comprises a first non-contact protrusion (421, 431) protruding from the second plate portion (405) toward the cap plate (501).

9. The secondary battery (100) as claimed in claim 8, wherein
the second plate portion (405) is welded to the electrode tab (301, 302, 310, 320);
the second plate portion (405) comprises a welded portion (407) on a portion to which the electrode tab (301, 302, 310, 320) is welded; and
the first non-contact protrusion (421, 431) protrudes from the second plate portion (405) to avoid the welded portion (407).

10. The secondary battery (100) as claimed in claim 8 or 9, wherein the first non-contact protrusion (421, 431) is located to be biased to a side in a width direction of the second plate portion (405).

11. The secondary battery (100) as claimed in any one of claims 8 to 10, wherein the first non-contact protrusion (421, 431) extends to be parallel to a longitudinal direction of the second plate portion (405).

12. The secondary battery (100) as claimed in any one of claims 8 to 11, wherein
the first non-contact protrusion (421, 431) comprises a plurality of first non-contact protrusions (421, 431), and
the plurality of first non-contact protrusions (421, 431) are arrayed in a longitudinal direction of the second plate portion (405).

13. The secondary battery (100) as claimed in any one of claims 2 to 12, wherein the heat capacity increasing part further comprises a second non-contact protrusion (425, 435) protruding from the first plate portion (403) toward the terminal (530, 540) to avoid the first contact protrusion (411).

14. The secondary battery (100) as claimed in claim 13, wherein
the second non-contact protrusion (425, 435) comprises a plurality of second non-contact protrusions (425, 435), and
the plurality of second non-contact protrusions (425, 435) are symmetrically located around the first contact protrusion (411).

15. A battery pack (1) comprising:
a housing (10); and
a plurality of secondary batteries (100) accommodated in the housing (10),
wherein each of the secondary batteries (100) comprises a case (101) comprising an opening (160), an electrode assembly (200) accommodated in the case (101), an electrode tab (301, 302, 310, 320) connected to the electrode assembly (200), a cap plate (501) closing the opening (160), a terminal (530, 540) coupled to the cap plate (501), and a current collecting member (400A, 400B, 400C, 400D) comprising a plate portion (401) coupled to the electrode tab (301, 302, 310, 320) and configured to allow a current flow therebetween, a terminal coupling part protruding from the plate portion (401) to be coupled to the terminal (530, 540) and configured to allow a current flow therebetween, and a heat capacity increasing part protruding from the plate portion (401) without contacting a portion of the cap plate (501) and the terminal (530, 540).
